# EUROPEAN PATENT APPLICATION

(11) **EP 2 219 091 A1**
(43) Date of publication of application: **18.08.2010**
(21) Application number: 09001229.5
(22) Date of filing: 29.01.2009
(51) Int. Cl.: G05B 19/418, G05B 23/02

(54) **Method and unit for controlling and monitoring a process**

(71) Applicant: Siemens Aktiengesellschaft, 80333 München (DE)
(72) Inventor: Lo, George, Plainsboro, NJ 08536 (US); Schneider, Dieter, 76744 Wörth (DE)

(57) **Abstract**

The present invention relates to a method and unit for controlling and monitoring a process, for example an industrial process. Furthermore, the present invention relates to a computer program product and a supervisory system comprising at least one such unit. An process specific object model is held in a managed object component (4) of a monitoring and control service unit (1) and represents the technological view of the process. First, subscriptions are established in a data access business logic component (8) via a data access delegate component (9) to data sources. Then, the data sources notify current process values via the data access delegate component (9) to the data access business logic component (8). After that, the current process values are stored in the object model held in the managed object component (4). These stored current process values are notified from the managed object component (4) to the data access business logic component (8). Finally, the stored current process values are passed from the data access business logic component (8) via a data access component (7) to a user interface (11).

## Description

The present invention relates to a method and unit for controlling and monitoring a process, for example an industrial process. Furthermore, the present invention relates to a computer program product and a supervisory system comprising at least one such unit.

Industrial processes include, for example, those of manufacturing, production, power generation, fabrication, and refining, and may run in continuous, batch, repetitive, or discrete modes. Such industrial processes are commonly controlled and monitored by a computer system. In this respect, SCADA (Supervisory Control And Data Acquisition) systems are known. A SCADA system usually consists of subsystems like a Human-Machine interface (HMI), a supervisory system, remote terminal units (RTUs), and communication infrastructure connecting the supervisory system to the RTUs. The HMI is the apparatus which presents process data to a human operator, and through this, the human operator, monitors and controls the process. The supervisory system, for example a computer system, gathers (acquires) data on the process and sends commands (control) to the process. The RTUs connect to sensors in the process, convert sensor signals to digital data, and send digital data to the supervisory system.

The SCADA system provides for a centralized system which monitors and controls entire sides, or complexes of systems spread out over large areas. Most control actions are performed automatically by the RTUs or by programmable logic controllers (PLCs). For example, a PLC may control the flow of cooling water through part of an industrial process. In such case, the SCADA system allows operators to change the set points for the flow and to enable alarm conditions, such as loss of flow and high temperature, to be displayed and recorded. A feedback control loop passes through the RTU or PLC, while the SCADA system monitors the overall performance of the loop.

That is, the SCADA system provides for a monitoring and control service (M&C Service) which is used to monitor and control a process, for example a technical process. In different domains like industrial automation, building automation, process control, etc. a process image is needed. Today these different domains build their own monitoring and control services which respectively implement a specific process image. One established product using such a specific process image is the SCADA product Simatic WinCC offered by Siemens AG, which is a process visualization system. Simatic WinCC is a modular PC-based operator control and monitoring system for visualizing and operating processes, production flows, machines and plants in all sectors. For example, one known module of Simatic WinCC is the WinCC/ProcessMonitor which is employed for the collection, aggregation, analysis and storage of process values and messages providing an online quality analysis for the optimization of production.

As mentioned above, conventionally each domain requires its own monitoring and control service for implementing a specific process image. However, for each monitoring and control service individual software is to be developed to achieve the desired functionality, which results in high engineering effort. In addition, in conventional systems the process image, which is hold within the monitoring and control service, and the connection to a data source run within the same operating system process. This results in instability and less robustness of the system, since, if one component of the system fails, usually the whole system is affected and can crash.

It is therefore an object of the present invention is to provide a monitoring and control service which can be re-used in different domains in a stable and reliable manner.

This object and other objects are solved by the features of the independent claims. Preferred embodiments of the invention are described by the features of the dependent claims.

The present invention provides for a monitoring and control service which simplifies the setup process of a supervisory system for processes and which can be re-used in different domains. The monitoring and control service is formed as a unit of components comprising a data access component, a data access business logic component, a data access delegate component, and a managed object component. The managed object component holds a process image comprising current values of the process, the so called process values. When setting up the monitoring and control service for a specific process in an arbitrary domain a specific object model, which is previously engineered for said process, is mapped to the corresponding process image in the managed object component, wherein the object model represents the technological view of the process. Said specific object model is created using base classes and a type system provided by an appropriate software platform. Thus, programming effort is reduced when setting up the monitoring and control service, since only a specific object model is needed which can be mapped to the all-purpose monitoring and control service according to the present invention. That is, it is not necessary to implement an individual monitoring and control service for each domain. The re-use of one monitoring and control service for different domains as provided by the present invention is expressed through different object models. Furthermore, since only one monitoring and control service for different domains is implemented, software maintainability is improved. A user of such platform component has only to provide his domain-specific object model.

In practice, when the managed object component holds the process specific object model, the data access business logic component establishes subscriptions via the data access delegate component to external data sources. The reference to the external data sources is retrieved out of the object model. Then, said data sources, which are accessed via an appropriate interface of the monitoring and control service and, therefore, can be called external data sources, notify current process values via such data source interface and the data access delegate component to the data access business logic component. These current process values are stored in the object model held in the managed object component and notified back from the managed object component to the data access business logic component. Finally, the stored current process values are passed from the data access business logic component via the data access component to a user interface of the monitoring and control service.

A client using the monitoring and control service of the present invention gains indirect access to field data of the data sources via the user interface, because he doesn't access the object model but receives the current process data (field data) via the data access business logic component and the data access component. Thus, the client doesn't need to have knowledge about the object model itself. Furthermore, the configuration of the monitoring and control service according to the present invention enables to decouple the access to properties of objects belonging to the object model from the object model itself, since the data access business logic component accesses the external data sources (e.g. field devices) via the delegate component and transfers received current process values to the object model held in the managed object component. Therefore, the client needs only to know the properties of the objects he is interested in but not about the object model.

According to a preferred embodiment of the present invention for example a client subscribes via the user interface to value properties at the data access component. The subscriptions are passed to the data access business logic component, wherein the data access business logic component subscribes at the managed object component. These additional steps can be performed at different points of time, depending on whether a configuration driven process image or a client driven process image is held in the managed object component.

According to a first alternative of the preferred embodiment a configuration driven process image is held in the managed object component to automatically acquire the current process values. In this case only the monitoring and control service acquires values from the data sources, e.g. external data sources, by means of preconfigured subscriptions stored in the data access business logic component. To achieve this, the steps of the preferred embodiment are performed after the current process values are stored in the object model. According to this first alternative a client cannot influence the acquisition, since his subscriptions are not transferred to the data sources. In other words, the client has no influence to the field devices but only to what the monitoring and control service acquires.

According to a second alternative of the preferred embodiment a client driven process image is held in the managed object component which prevents that the monitoring and control service acquires values from the data sources by itself. The current process values are acquired on demand, for example by a client request, and the steps of the preferred embodiment are preformed before the subscriptions are established in the data access business logic component. Thus, the monitoring and control service fills the process image, that is, the object model mapped to the process image, only on behalf of the client.

According to a further embodiment of the present invention the current process values notified to the data access business logic component from the data sources via the data access delegate component are pre-processed before being stored in the object model held in the managed object component. In such a case the user providing his domain-specific object model also implements domain-specific preprocessing like scaling, to scale the current process values to an appropriate format.

According to a still further embodiment of the present invention the data sources and the managed object component run in different operating system processes. Thus, the monitoring and control service can be decoupled from the data sources, wherein the data sources may be present on the same computer node as the monitoring and control service or on a different computer node. Such decoupling enables that problems in one process does not affect the other process. In particular, a crash of one data source does not result in a crash of the process image so that the communication between other data sources and the monitoring and control service can be continued. In other words, the software availability is improved because the monitoring and control service can run in an own operating system process different from the process(es) the data sources is(are) running.

A further aspect of the present invention relates to a computer program product, the computer program product comprising a computer readable medium, having thereon computer program code means, when said program is loaded, to make a computer executable for carrying out the method as detailed above.

A still further aspect of the present invention relates to a supervisory system comprising at least one monitoring and control service unit as detailed above.

These and other aspects of the present invention will be apparent from and elucidated with reference to the embodiments thereafter. It should be noted that the use of reference signs shall not be construed as limiting the scope of the invention.
- FIG 1: shows a schematic diagram of a system according to an embodiment of the present invention.
- FIG 2: shows a flow chart of a method according to an embodiment of the present invention.

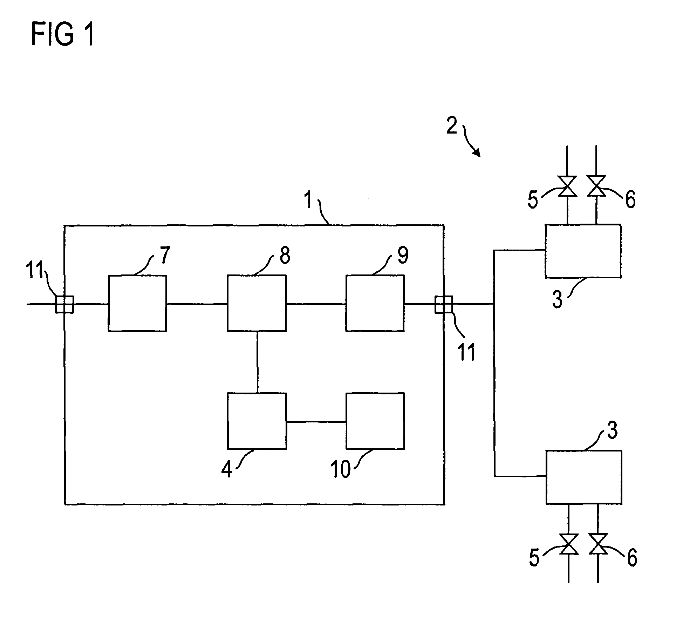

FIG 1 shows a schematic diagram of a system according to an embodiment of the present invention. Figure 1 shows a monitoring and control service unit 1 and a tank farm 2 with two tanks 3 monitored and controlled by said unit 1. However, the schematic diagram of figure 1 is merely an overview and does, for example, not show details like gateways between the monitoring and control service unit 1 and the tank farm 2, which are known in the art. The monitoring and control service unit 1 forms part of a supervisory system (not shown) of the tank farm 2 and comprises components interacting with each other. The tanks 3 shown in figure 1 are part of a tank farm which is, for example, hierarchically organized. A managed object component 4 of the monitoring and control service unit 1 holds a process specific object model and process values of the tank farm 2. Process values held in the managed object component 4 are, for example, a position state of a fill valve 5 of the tanks 3, a position state of a drain valve 6 of the tanks 3, a value of a tank level, and an actual value of the speed of a drain pump (not shown) of the tanks 3. That is, in the embodiment of figure 1 each tank 3 is connected to a fill valve 5, a drain valve 6, and a drain pump (not shown), and comprises a sensor (not shown) to determine the fill level of the tank. The tanks 3 can further comprise a temperature sensor (not shown) to control and monitor the temperature of the tank content.

For example, each tank 3 of figure 1 is modeled as a managed object with two methods for filling and draining the tank and can also be represented as a hierarchy of managed objects. That is, the managed object tank aggregates the respective managed objects for its related hardware, that is the fill valve 5, the drain valve 6, the sensors (not shown) for a tank level and the tank content temperature, and the drain pump (not shown). These managed objects have again properties for certain aspects of interest to be defined by engineering. For example, these properties are process values modeled as arbitrary property (high or low tank limit, error bits of the valves and the pump, etc.), process values modeled as process value property (position state of the valves, value of the tank level, state and speed of the drain pump, etc.), and simple commands modeled as process value property.

The data sources (e.g. field devices like the tanks 3) implemented by services can run as processes under different operating systems (e.g. Java and .NET) on the same computer node or on remote computer nodes. Data from the field devices are, for example, accessed through Southbound Gateway Services or any services implementing the appropriate interface. Even another monitoring and control service can act as an external data source (not shown).

According to the present invention the monitoring and control service unit 1 comprises a data access component 7, a data access business logic component 8, a data access delegate component 9, the managed object component 4 and a persistence component 10. The managed object component 4 holds an object model and has persistence, as indicated by the persistence component 10. The data access business logic component 8 establishes subscriptions to the data sources (in Figure 1 the tanks 3) via the data access delegate component 9 and an appropriate interface 11 of the monitoring and control service unit 1. The reference to the data sources is retrieved out of the object model. In turn, the external data sources notify current process values via the data access delegate component 9 to the data access business logic component 8. These current process values are pre-processed and stored in the object model held in the managed object component 4. Then, independent of whether the monitoring and control service is configuration driven or client driven, the managed object component 4 notifies the stored current process values to the data access business logic component 8 which passes these values via the data access component 7 and an appropriate interface 11 to subscribed clients. The interfaces 11 of the monitoring and control service unit 1 shown in figure 1 are, for example, IDataAccess interfaces.

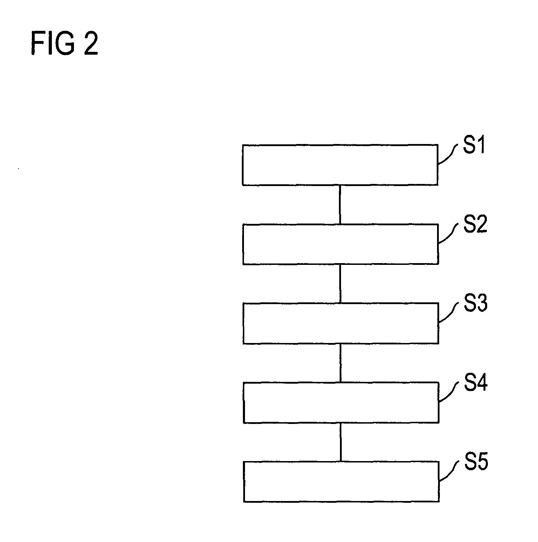

FIG 2 shows a flow chart of a method according to an embodiment of the present invention. In a first step S1 subscriptions are established in a data access business logic component via a data access delegate component to data sources. In a second step S2 the data sources notify current process values via the data access delegate component to the data access business logic component. In a third step S3 the current process values are stored in an object model held in a managed object component. In a fourth step S4 the stored current process values are notified from the managed object component to the data access business logic component. In a fifth step S5 the stored current process values are passed from the data access business logic component via a data access component to a user interface.

## Claims

1. Method for controlling and monitoring a process via a monitoring and control service (1) including a managed object component (4) for holding a process specific object model and process values, the method comprising the steps of:
- establishing (S1) subscriptions in a data access business logic component (8) via a data access delegate component (9) to data sources, wherein the reference to the data sources is retrieved out of the object model,
- notifying (S2) current process values from the data sources via the data access delegate component (9) to the data access business logic component (8),
- storing (S3) the current process values in the object model held in the managed object component (4),
- notifying (S4) the stored current process values from the managed object component (4) to the data access business logic component (8), and
- passing (S5) the stored current process values from the data access business logic component (8) via a data access component (7) to a user interface (11).

2. Method according to claim 1, comprising the further steps of:
- subscribing via the user interface (11) to value properties at the data access component (7), and
- passing the subscriptions to the data access business logic component (8),
wherein the data access business logic component (8) subscribes at the managed object component (4).

3. Method according to claim 2, wherein the current process values are acquired automatically by means of preconfigured subscriptions from the data sources and the steps of claim 2 are performed after the step of storing the current process values in the object model.

4. Method according to claim 2, wherein the current process values are acquired on demand and wherein the steps of claim 2 are performed before the step of establishing subscriptions in the data access business logic component (8).

5. Method according to any of the preceding claims, wherein the current process values notified to the data access business logic component (8) are pre-processed before being stored in the object model held in the managed object component (4).

6. Method according to any of the preceding claims, wherein the data sources and the managed object component (4) run in different operating system processes.

7. Method according to any of the preceding claims, wherein the process specific object model is mapped to a process image held in the managed object component (4) and comprising process values.

8. Computer program product, the computer program product comprising a computer readable medium, having thereon computer program code means, when said program is loaded, to make a computer executable for carrying out the method according to any of the preceding claims.

9. Monitoring and control service unit (1) for controlling and monitoring a process, comprising a user interface (11) and a data source interface (11), and comprising a managed object component (4), a data access business logic component (8), a data access delegate component (9), and a data access component (7), wherein the monitoring and control service unit (1) is adapted to carry out the method according to any of claims 1 to 7.

10. A supervisory system comprising at least one monitoring and control service unit (1) according to claim 9.
